# EUROPEAN PATENT SPECIFICATION

(11) **EP 3 798 516 B1**
(45) Date of publication and mention of the grant of the patent: **07.06.2023**
(21) Application number: 20196565.4
(22) Date of filing: 17.09.2020
(51) Int. Cl.: F23J 15/06, F23J 15/04, B01D 53/34, F23D 17/00, F24D 10/00

(54) **ARRANGEMENT AND METHOD FOR TRANSFERRING HEAT**
ANORDNUNG UND VERFAHREN ZUR WÄRMEÜBERTRAGUNG
AGENCEMENT ET PROCÉDÉ DE TRANSFERT DE CHALEUR

(30) Priority: 30.09.2019 FI 20195829
(43) Date of publication of application: 31.03.2021
(73) Proprietor: Caligo Industria Oy, 20810 Turku (FI)
(72) Inventor: NUMMILA, Mika, 40200 Jyväskylä (FI)
(74) Representative: Berggren Oy

(56) References cited:
- EP-A1- 2 772 300
- EP-A1- 3 091 294
- EP-A2- 2 644 993
- CN-A- 108 266 777
- DD-A1- 214 188
- US-A1- 2003 034 149

## Description

### TECHNICAL FIELD OF THE INVENTION

The present invention relates to an arrangement and a method for transferring heat according to the preambles of the appended independent claims.

### BACKGROUND OF THE INVENTION

Various industrial plants, such as refineries, paper mills and power plants, produce waste gases, which typically contain a large amount of heat. This heat can be recovered and utilized in many applications, such as a district heating network.

Document EP 2772300 A1 discloses a method and a system for removing SO₂ from waste combustion flue gas. Document EP 2644993 A2 discloses a method and an arrangement for transferring heat from flue gas into fluid.

The heat contained in the waste gas can be transferred to district heating water with a wet scrubber. The waste gas is conveyed through the wet scrubber and cooled therein with scrubbing liquid, whereby water vapour contained in the waste gas condenses and the released condensing heat is transferred to the scrubbing liquid. The amount of heat that is released in the scrubbing process depends on the moisture content of the waste gas and the temperature of the scrubbing liquid. From the scrubbing liquid, the heat is transferred to the district heating water, for example, with a heat exchanger.

A problem associated with the above arrangement is that the heating of the district heating water is dependent on the production of the waste gas. The amount of the waste gas produced by an industrial plant can vary significantly as a function of time and there can even be periods of time where the waste gas is not produced at all. The effects of the variations in the production of the waste gas can be reduced with an auxiliary heating system that enables to heat the district heating water when a required amount of heat cannot be recovered from the waste gas. The disadvantage of the auxiliary heating system is, however, that the effects of the variations in the production of the waste gas are reduced at the expense of an increased consumption of electricity. Another problem of the above arrangement is that the heat of the waste gas, which is not needed to heat the district heating water, is dissipated into the atmosphere.

### OBJECTIVES OF THE INVENTION

It is the main objective of the present invention to reduce or even eliminate the prior art problems presented above.

It is an objective of the present invention to provide an arrangement and a method for transferring heat. In more detail, it is an objective of the invention to provide an arrangement and a method enabling to reduce the effects of variations in the production of waste gas in the heating of the district heating water. It is a further objective of the invention to provide an arrangement and a method enabling to increase the heat recovery from the waste gas to district heating water.

In order to realise the above-mentioned objectives, the arrangement and the method according to the invention are characterised by what is presented in the characterising portions of the appended independent claims. Advantageous embodiments of the invention are described in the dependent claims.

### DESCRIPTION OF THE INVENTION

An arrangement for transferring heat according to the invention comprises a wet scrubber coupled between a return side and a supply side of a district heating network, the wet scrubber being configured to transfer heat from waste gas to district heating water, a heat accumulator containing heat storage liquid, and a heat exchanger having a first side coupled to a top part and a bottom part of the heat accumulator and a second side coupled to the return side and the supply side of the district heating network.

The arrangement according to the invention enables the transfer of heat (energy) from the waste gas to the district heating water that is conveyed in the district heating network. The waste gas, which can be produced in an industrial plant, such as a refinery, a paper mill or a power plant, is conveyed through the wet scrubber. The waste gas can be conveyed from the industrial plant to the wet scrubber through a pipe. In the wet scrubber, the waste gas is cooled with scrubbing liquid, whereby water vapour contained in the waste gas condenses and the released condensing heat is transferred to the scrubbing liquid. The scrubbing liquid may contain water and additional chemicals or substances. The amount of heat that is released in the scrubbing process depends on the moisture content of the waste gas and the temperature of the scrubbing liquid. From the scrubbing liquid, the heat is transferred to the district heating water. For this purpose, the wet scrubber may comprise a heat exchanger or a heat pump.

The wet scrubber is coupled between the return side and the supply side of the district heating network. Preferably, the wet scrubber is coupled between a return pipe and a supply pipe of the district heating network. The (return) district heating water to be heated is conveyed to the wet scrubber in the return pipe of the district heating network. From the wet scrubber, the heated (supply) district heating water is supplied back to the district heating network in the supply pipe of the district heating network. The temperature of the district heating water to be heated can be, for example, 45-60 °C, and the temperature of the heated district heating water can be, for example, 80-100 °C.

The wet scrubber may comprise one or more heat exchange zones, through which the waste gas is passed. The heat exchange zone comprises a random packing bed that acts as a heat and mass transfer surface. The waste gas is cooled by spraying scrubbing liquid over the packing bed, as a result of which heat is released from the waste gas and recovered into the scrubbing liquid. The scrubbing liquid can be circulated through one or more heat exchangers and/or heat pumps in order to transfer heat from the scrubbing liquid to the district heating water.

The arrangement according to the invention enables the transfer of heat (energy) to and from the heat accumulator by using the heat exchanger. Heat can be stored into the heat accumulator when heat from the waste gas is transferred to the district heating water, especially when the waste gas contains so much heat that all the heat cannot be supplied to the district heating network. Heat can be released from the heat accumulator to the district heating water when a required amount of heat cannot be recovered from the waste gas.

The heat exchanger transfers heat from the first side to the second side or from the second side to the first side, depending on the temperatures of the heat storage liquid and the district heating water that are conveyed through the heat exchanger. In the heat exchanger, heat is transferred from a higher temperature side to a lower temperature side.

The first side of the heat exchanger is coupled between the top part and the bottom part of the heat accumulator. The first side of the heat exchanger can be coupled to the heat accumulator with pipes. The heat storage liquid from the heat accumulator can be conveyed through the first side of the heat exchanger in both directions.

The second side of the heat exchanger is coupled between the return side and the supply side of the district heating network. The second side of the heat exchanger can be coupled to the return pipe and the supply pipe of the district heating network with pipes. The district heating water can be conveyed through the second side of the heat exchanger in both directions.

When heat is stored into the heat accumulator, the (cold) heat storage liquid is conveyed from the bottom part of the heat accumulator through the first side of the heat exchanger to the top part of the heat accumulator, and the (hot) district heating water is conveyed from the supply side of the district heating network through the second side of the heat exchanger to the return side of the district heating network. In the heat exchanger, the heat is transferred from the district heating water to the heat storage liquid. The temperature of the heat storage liquid that flows into the heat exchanger can be, for example, 30-45 °C, and the temperature of the heat storage liquid that flows out of the heat exchanger can be, for example, 75-90 °C. The temperature of the district heating water that flows into the heat exchanger can be, for example, 80-95 °C, and the temperature of the district heating water that flows out of the heat exchanger can be, for example, 35-50 °C.

When heat is released from the heat accumulator, the (hot) heat storage liquid is conveyed from the top part of the heat accumulator through the first side of the heat exchanger to the bottom part of the heat accumulator, and the (cold) district heating water is conveyed from the return side of the district heating network through the second side of the heat exchanger to the supply side of the district heating network. In the heat exchanger, the heat is transferred from the heat storage liquid to the district heating water. The temperature of the heat storage liquid that flows into the heat exchanger can be, for example, 75-90 °C, and the temperature of the heat storage liquid that flows out of the heat exchanger can be, for example, 42-57 °C. The temperature of the district heating water that flows into the heat exchanger can be, for example, 40-55 °C, and the temperature of the district heating water that flows out of the heat exchanger can be, for example, 72-85 °C.

The heat accumulator functions as a heat storage into which heat can be stored and from which heat can be released. The heat is stored in the heat storage liquid, the temperature of which gradually increases from the bottom of the heat accumulator upwards. The heat accumulator is typically operating so that the cold heat storage liquid, as heavier, is stratified to the bottom of the heat accumulator while the hot heat storage liquid is on the top of the heat accumulator. The thermocline varies in height during the charging and discharging of the heat accumulator. At the bottom part of the heat accumulator the temperature of the heat storage liquid can be, for example, 30-45 °C, and at the top part of the heat accumulator the temperature of the heat storage liquid can be, for example, 75-90 °C. The heat storage liquid may contain water and in some cases salts.

The heat accumulator may comprise an upright container that can be made of steel. The volume of the heat accumulator can be, for example, 500-20000 m³. The arrangement may comprise one or a plurality of heat accumulators. The heat accumulators are preferably arranged side by side and coupled to each other. Typically, the heat accumulator(s) is(are) operating at atmospheric pressure.

According to an embodiment of the invention the arrangement comprises means for conveying heat storage liquid from the bottom part of the heat accumulator through the first side of the heat exchanger to the top part of the heat accumulator, and means for conveying district heating water from the supply side of the district heating network through the second side of the heat exchanger to the return side of the district heating network. The arrangement according to this embodiment enables to store heat into the heat accumulator. This is achieved by transferring heat from the district heating water to the heat storage liquid with the heat exchanger. The means for conveying heat storage liquid may comprise a pipe coupled between the bottom part of the heat accumulator and the first side of the heat exchanger, and a pipe coupled between the first side of the heat exchanger and the top part of the heat accumulator. The means for conveying heat storage liquid may also comprise a pump for pumping the heat storage liquid through the first side of the heat exchanger. The means for conveying district heating water may comprise a pipe coupled between the supply pipe of the district heating network and the second side of the heat exchanger, and a pipe coupled between the second side of the heat exchanger and the return pipe of the district heating network. The means for conveying district heating water may also comprise a pump for pumping the district heating water through the second side of the heat exchanger.

According to the invention the arrangement comprises means for conveying heat storage liquid from the top part of the heat accumulator through the first side of the heat exchanger to the bottom part of the heat accumulator, and means for conveying district heating water from the return side of the district heating network through the second side of the heat exchanger to the supply side of the district heating network. The arrangement according to this embodiment enables to release heat from the heat accumulator. This is achieved by transferring heat from the heat storage liquid to the district heating water with the heat exchanger. The means for conveying heat storage liquid may comprise a pipe coupled between the top part of the heat accumulator and the first side of the heat exchanger, and a pipe coupled between the first side of the heat exchanger and the bottom part of the heat accumulator. The means for conveying heat storage liquid may also comprise a pump for pumping the heat storage liquid through the first side of the heat exchanger. The means for conveying district heating water may comprise a pipe coupled between the return pipe of the district heating network and the second side of the heat exchanger, and a pipe coupled between the second side of the heat exchanger and the supply pipe of the district heating network. The means for conveying district heating water may also comprise a pump for pumping the district heating water through the second side of the heat exchanger.

According to the invention the arrangement comprises an evaporator having a first side and a second side, the first side being coupled to the first side of the heat exchanger and the bottom part of the heat accumulator, and a condenser having a first side and a second side, the first side being coupled to the second side of the heat exchanger and the supply side of the district heating network and the second side being coupled to the second side of the evaporator.

The first side of the evaporator is coupled between the first side of the heat exchanger and the bottom part of the heat accumulator. The arrangement may comprise a pipe coupled between the first side of the heat exchanger and the first side of the evaporator, and a pipe coupled between the first side of the evaporator and the bottom part of the heat accumulator. The first side of the condenser is coupled between the second side of the heat exchanger and the supply side of the district heating network. The arrangement may comprise a pipe coupled between the second side of the heat exchanger and the first side of the condenser, and a pipe coupled between the first side of the condenser and the supply pipe of the district heating network. The second sides of the evaporator and the condenser are coupled together with a closed circuit. The closed circuit contains heat transfer media that can be circulated in the closed circuit with a compressor.

The evaporator and the condenser form a heat pump in which heat is transferred by using the heat transfer media, such as ammonia (NH3, R717). In the evaporator, heat from the heat storage liquid is transferred into the heat transfer media, which evaporates into a gas. The gas is compressed to a higher-pressure level and at the same time its temperature is increased. In the condenser, the gas condenses, and the condensing heat is transferred to the district heating water.

The arrangement according to this embodiment improves the transfer of heat from the heat storage liquid into the district heating water. After the heat storage liquid from the top part of the heat accumulator has passed through the first side of the heat exchanger, the heat storage liquid is conveyed through the first side of the evaporator. In the evaporator, heat is transferred from the heat storage liquid to the heat transfer media that is circulated between the second sides of the evaporator and the condenser. In the condenser, heat from the heat transfer media is transferred into the district heating water that is conveyed through the first side of the condenser. The district heating water is conveyed through the first side of the condenser after it has passed through the second side of the heat exchanger. After the heat storage liquid has passed through the evaporator, the temperature of the heat storage liquid can be, for example, 30-35 °C. By cooling the heat storage liquid below the temperature of the return district heating water, the capacity of the heat accumulator increases significantly. This reduces the needed size of the heat accumulator, even by 50 %.

According to an embodiment of the invention the arrangement comprises a heating unit coupled between the first side of the condenser and the supply side of the district heating network. The heating unit enables to heat the district heating water when a required amount of heat cannot be transferred from the heat storage fluid to the district heating water. The arrangement may comprise a pipe coupled between the first side of the condenser and the heating unit, and a pipe coupled between the heating unit and the supply pipe of the district heating network.

The present invention also relates to a method for transferring heat. The method comprises conveying waste gas through a wet scrubber that is coupled between a return side and a supply side of a district heating network, conveying district heating water through the wet scrubber, whereby heat is transferred from the waste gas to the district heating water, conveying heat storage liquid from a top part of a heat accumulator through a first side of a heat exchanger to a bottom part of the heat accumulator, and conveying district heating water from the return side of the district heating network through a second side of the heat exchanger to the supply side of the district heating network, whereby heat is transferred from the heat storage liquid to the district heating water. The method enables to release heat from the heat accumulator. This is achieved by transferring heat from the heat storage liquid to the district heating water with the heat exchanger.

According to the invention the method comprises after the heat storage liquid from the top part of the heat accumulator has passed through the first side of the heat exchanger, conveying the heat storage liquid through a first side of an evaporator, after the district heating water from the return side of the district heating network has passed through the second side of the heat exchanger, conveying the district heating water through a first side of a condenser, and circulating heat transfer media in a closed circuit between a second side of the evaporator and a second side of the condenser, whereby heat is transferred from the heat storage liquid to the district heating water.

According to an embodiment of the invention the method comprises after the district heating water from the return side of the district heating network has passed through the first side of the condenser, heating the district heating water with a heating unit.

An advantage of the invention is that it enables to reduce the effects of variations in the production of waste gas in the heating of the district heating water. Another advantage of the invention is that it enables to increase the heat recovery from the waste gas to the district heating water.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the arrangement as well as the method according to the invention, even though this is not always separately mentioned.

### BRIEF DESCRIPTION OF THE DRAWINGS

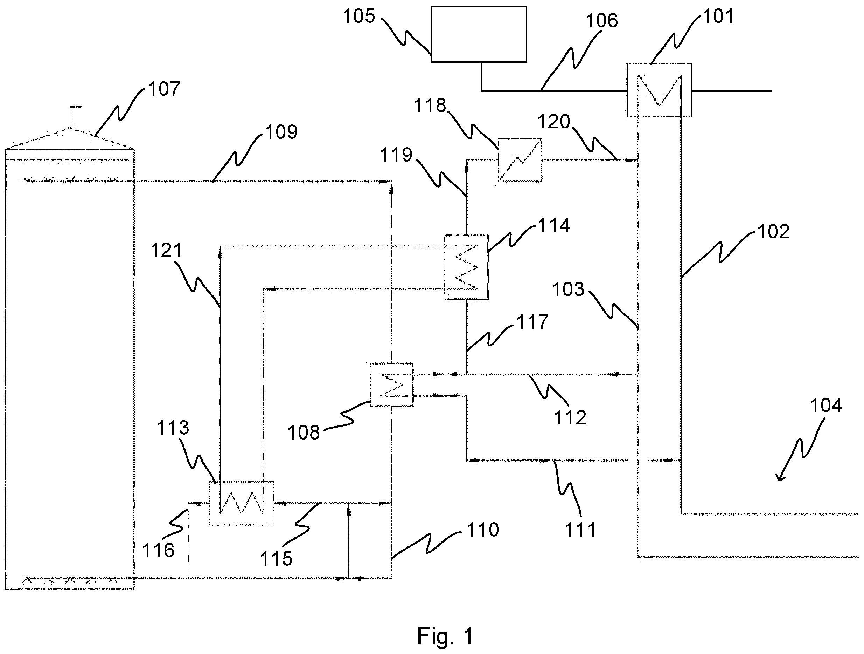

- Fig. 1: illustrates an arrangement according to an embodiment of the invention for transferring heat.

### DETAILED DESCRIPTION OF THE DRAWINGS

Fig. 1 illustrates an arrangement according to an embodiment of the invention for transferring heat. The arrangement comprises a wet scrubber 101 that is coupled to a return pipe 102 and a supply pipe 103 of a district heating network 104. The wet scrubber 101 transfers heat from waste gas to district heating water that is conveyed to the wet scrubber 101 in the return pipe 102. The heated district heating water is supplied back to the district heating network 104 in the supply pipe 103. The waste gas is produced in an industrial plant 105 from which it is conveyed in a pipe 106 to the wet scrubber 101. In the wet scrubber 101, the waste gas is cooled with scrubbing liquid, whereby water vapour contained in the waste gas condenses and the released condensing heat is transferred to the scrubbing liquid. From the scrubbing liquid, the heat is transferred to the district heating water.

The arrangement comprises a heat accumulator 107 that contains heat storage liquid. Heat can be stored into and released from the heat accumulator 107 by using a heat exchanger 108. A first side of the heat exchanger 108 is coupled to a top part of the heat accumulator 107 with a pipe 109 and to a bottom part of the heat accumulator 107 with a pipe 110. A second side of the heat exchanger 108 is coupled to the return pipe 102 with a pipe 111 and to the supply pipe 103 with a pipe 112. The heat exchanger 108 can transfer heat from the first side to the second side and from the second side to the first side, depending on the temperatures of the heat storage liquid and the district heating water that are conveyed through the heat exchanger 108. In the heat exchanger 108, heat is transferred from a higher temperature side to a lower temperature side. The arrangement comprises pumps (not shown in fig. 1) for pumping in both directions the heat storage liquid through the first side of the heat exchanger 108 and the district heating water through the second side of the heat exchanger 108.

The arrangement also comprises an evaporator 113 and a condenser 114. A first side of the evaporator 113 is coupled to the first side of the heat exchanger 108 with a pipe 115 and to the bottom part of the heat accumulator 107 with a pipe 116. A first side of the condenser 114 is coupled to the second side of the heat exchanger 108 with a pipe 117 and to a heating unit 118 with a pipe 119. The heating unit 118 is further coupled to the supply pipe 103 with a pipe 120. Second sides of the evaporator 113 and the condenser 114 are coupled together with a closed circuit 121. The closed circuit 121 contains heat transfer media that can be circulated in the closed circuit 121 with a compressor (not shown in fig. 1). The arrangement comprises valves (not shown in fig. 1) for controlling the flow of the heat storage liquid between the pipes 110, 115 and 116, and the district heating water between the pipes 112 and 117.

When heat is stored into the heat accumulator 107, the heat storage liquid from the bottom part of the heat accumulator 107 is conveyed through the pipe 110 to the heat exchanger 108 and therefrom through the pipe 109 to the top part of the heat accumulator 107. At the same time, the district heating water from the supply pipe 103 is conveyed through the pipe 112 to the heat exchanger 108 and therefrom through the pipe 111 to the return pipe 102. In the heat exchanger 108, heat is transferred from the district heating water to the heat storage liquid.

When heat is released from the heat accumulator 107, the heat storage liquid from the top part of the heat accumulator 107 is conveyed through the pipe 109 to the heat exchanger 108 and therefrom through the pipe 115 to the evaporator 113. From the evaporator 113, the heat storage liquid is conveyed through the pipe 116 to the bottom part of the heat accumulator 107. At the same time, the district heating water from the return pipe 102 is conveyed through the pipe 111 to the heat exchanger 108 and therefrom through the pipe 117 to the condenser 114. From the condenser 114, the district heating water is conveyed through the pipe 119 to the heating element 118 and therefrom through the pipe 120 to the supply pipe 103. In the heat exchanger 108, heat is transferred from the heat storage liquid to the district heating water. In the evaporator 113, heat is transferred from the heat storage liquid to the heat transfer media that is circulated between the evaporator 113 and the condenser 114. In the condenser 114, heat from the heat transfer media is transferred to the district heating water. The heating unit 118 is used to heat the district heating water when a required amount of heat cannot be transferred from the heat storage fluid to the district heating water.

Only an advantageous exemplary embodiment of the invention is described in the figure. It is clear to a person skilled in the art that the invention is not restricted only to the examples presented above, but the invention may vary within the limits of the claims presented hereafter.

## Claims

1. An arrangement for transferring heat, comprising:
- a wet scrubber (101) coupled between a return side and a supply side of a district heating network (104), the wet scrubber (101) being configured to transfer heat from waste gas to district heating water,
**characterised in that** the arrangement comprises:
- a heat accumulator (107) containing heat storage liquid,
- a heat exchanger (108) having a first side coupled to a top part and a bottom part of the heat accumulator (107) and a second side coupled to the return side and the supply side of the district heating network (104),
- means (109, 110) for conveying heat storage liquid from the top part of the heat accumulator (107) through the first side of the heat exchanger (108) to the bottom part of the heat accumulator (107),
- means (111, 112) for conveying district heating water from the return side of the district heating network (104) through the second side of the heat exchanger (108) to the supply side of the district heating network (104),
- an evaporator (113) having a first side and a second side, the first side being coupled to the first side of the heat exchanger (108) and the bottom part of the heat accumulator (107), and
- a condenser (114) having a first side and a second side, the first side being coupled to the second side of the heat exchanger (108) and the supply side of the district heating network (104) and the second side being coupled to the second side of the evaporator (113).

2. The arrangement according to claim 1, **characterised in that** the arrangement comprises:
- means (109, 110) for conveying heat storage liquid from the bottom part of the heat accumulator (107) through the first side of the heat exchanger (108) to the top part of the heat accumulator (107), and
- means (111, 112) for conveying district heating water from the supply side of the district heating network (104) through the second side of the heat exchanger (108) to the return side of the district heating network (104).

3. The arrangement according to claim 1 or 2, **characterised in that** the arrangement comprises a heating unit (118) coupled between the first side of the condenser (114) and the supply side of the district heating network (104).

4. A method for transferring heat, comprising:
- conveying waste gas through a wet scrubber (101) that is coupled between a return side and a supply side of a district heating network (104), and
- conveying district heating water through the wet scrubber (101), whereby heat is transferred from the waste gas to the district heating water,
**characterised in that** the method comprises:
- conveying heat storage liquid from a top part of a heat accumulator (107) through a first side of a heat exchanger (108) to a bottom part of the heat accumulator (107),
- conveying district heating water from the return side of the district heating network (104) through a second side of the heat exchanger (108) to the supply side of the district heating network (104), whereby heat is transferred from the heat storage liquid to the district heating water,
- after the heat storage liquid from the top part of the heat accumulator (107) has passed through the first side of the heat exchanger (108), conveying the heat storage liquid through a first side of an evaporator (113),
- after the district heating water from the return side of the district heating network (104) has passed through the second side of the heat exchanger (108), conveying the district heating water through a first side of a condenser (114), and
- circulating heat transfer media in a closed circuit (121) between a second side of the evaporator (113) and a second side of the condenser (114), whereby heat is transferred from the heat storage liquid to the district heating water.

5. The method according to claim 4, **characterised in that** the method comprises:
- after the district heating water from the return side of the district heating network (104) has passed through the first side of the condenser (114), heating the district heating water with a heating unit (118).

## Patentansprüche

1. Anordnung zum Übertragen von Wärme, umfassend:
- einen Nassabscheider (101), der zwischen eine Rücklaufseite und eine Zulaufseite eines Fernwärmenetzes (104) gekoppelt ist, wobei der Nassabscheider (101) so konfiguriert ist, dass er die Wärme aus dem Abgas auf das Fernheizwasser überträgt,
**dadurch gekennzeichnet, dass** die Anordnung Folgendes umfasst:
- einen Wärmespeicher (107), der eine Wärmespeicherflüssigkeit enthält,
- einen Wärmetauscher (108) mit einer ersten Seite, die mit einem oberen Teil und einem unteren Teil des Wärmespeichers (107) gekoppelt ist, und einer zweiten Seite, die mit der Rücklaufseite und der Zulaufseite des Fernwärmenetzes (104) gekoppelt ist,
- Mittel (109, 110) zum Fördern der Wärmespeicherflüssigkeit von dem oberen Teil des Wärmespeichers (107) durch die erste Seite des Wärmetauschers (108) zu dem unteren Teil des Wärmespeichers (107),
- Mittel (111, 112) zum Fördern des Fernwärmewassers von der Rücklaufseite des Fernwärmenetzes (104) durch die zweite Seite des Wärmetauschers (108) zur Zulaufseite des Fernwärmenetzes (104),
- einen Verdampfer (113) mit einer ersten Seite und einer zweiten Seite, wobei die erste Seite mit der ersten Seite des Wärmetauschers (108) und dem unteren Teil des Wärmespeichers (107) gekoppelt ist, und
- einen Kondensator (114) mit einer ersten Seite und einer zweiten Seite, wobei die erste Seite mit der zweiten Seite des Wärmetauschers (108) und der Zulaufseite des Fernwärmenetzes (104) gekoppelt ist und die zweite Seite mit der zweiten Seite des Verdampfers (113) gekoppelt ist.

2. Anordnung nach Anspruch 1, **dadurch gekennzeichnet, dass** die Anordnung Folgendes umfasst:
- Mittel (109, 110) zum Fördern von Wärmespeicherflüssigkeit aus dem unteren Teil des Wärmespeichers (107) durch die erste Seite des Wärmetauschers (108) zum oberen Teil des Wärmespeichers (107), und
- Mittel (111, 112) zum Fördern des Fernwärmewassers von der Zulaufseite des Fernwärmenetzes (104) durch die zweite Seite des Wärmetauschers (108) zur Rücklaufseite des Fernwärmenetzes (104) .

3. Anordnung nach Anspruch 1 oder 2, **dadurch gekennzeichnet, dass** die Anordnung eine Heizeinheit (118) umfasst, die zwischen der ersten Seite des Kondensators (114) und der Zulaufseite des Fernwärmenetzes (104) gekoppelt ist.

4. Verfahren zur Übertragung von Wärme, umfassend:
- Fördern des Abgases durch einen Nassabscheider (101), der zwischen einer Rücklaufseite und einer Zulaufseite eines Fernwärmenetzes (104) gekoppelt ist, und
- Fördern des Fernwärmewassers durch den Nassabscheider (101), wodurch Wärme von dem Abgas auf das Fernwärmewasser übertragen wird,
**dadurch gekennzeichnet, dass** das Verfahren Folgendes umfasst:
- Fördern der Wärmespeicherflüssigkeit von einem oberen Teil eines Wärmespeichers (107) durch eine erste Seite eines Wärmetauschers (108) zu einem unteren Teil des Wärmespeichers (107),
- Fördern des Fernwärmewasser von der Rücklaufseite des Fernwärmenetzes (104) durch eine zweite Seite des Wärmetauschers (108) zur Zulaufseite des Fernwärmenetzes (104), wodurch Wärme von der Wärmespeicherflüssigkeit auf das Fernwärmewasser übertragen wird,
- nachdem die Wärmespeicherflüssigkeit aus dem oberen Teil des Wärmespeichers (107) die erste Seite des Wärmetauschers (108) durchlaufen hat, Fördern der Wärmespeicherflüssigkeit durch eine erste Seite eines Verdampfers (113),
- nachdem das Fernwärmewasser von der Rücklaufseite des Fernwärmenetzes (104) die zweite Seite des Wärmetauschers (108) durchlaufen hat, Fördern des Fernwärmewassers durch eine erste Seite eines Kondensators (114), und
- Zirkulieren von Wärmeträgermedien in einem geschlossenen Kreislauf (121) zwischen einer zweiten Seite des Verdampfers (113) und einer zweiten Seite des Kondensators (114), wodurch Wärme von der Wärmespeicherflüssigkeit auf das Fernheizwasser übertragen wird.

5. Verfahren nach Anspruch 4, **dadurch gekennzeichnet, dass** das Verfahren Folgendes umfasst:
- nachdem das Fernwärmewasser von der Rücklaufseite des Fernwärmenetzes (104) die erste Seite des Kondensators (114) durchlaufen hat, Erwärmen des Fernwärmewassers mit einer Heizeinheit (118).

## Revendications

1. Agencement pour transférer de la chaleur, comprenant :
- un épurateur par voie humide (101) couplé entre un côté retour et un côté alimentation d'un réseau de chauffage urbain (104), l'épurateur par voie humide (101) étant conçu pour transférer de la chaleur depuis des gaz résiduaires vers de l'eau de chauffage urbain,
**caractérisé en ce que** l'agencement comprend :
- un accumulateur de chaleur (107) contenant un liquide de stockage de chaleur,
- un échangeur de chaleur (108) ayant un premier côté couplé à une partie supérieure et à une partie inférieure de l'accumulateur de chaleur (107) et un second côté couplé au côté retour et au côté alimentation du réseau de chauffage urbain (104),
- des moyens (109, 110) pour transporter un liquide de stockage de chaleur depuis la partie supérieure de l'accumulateur de chaleur (107) à travers le premier côté de l'échangeur de chaleur (108) vers la partie inférieure de l'accumulateur de chaleur (107),
- des moyens (111, 112) pour transporter de l'eau de chauffage urbain depuis le côté retour du réseau de chauffage urbain (104) à travers le second côté de l'échangeur de chaleur (108) vers le côté alimentation du réseau de chauffage urbain (104),
- un évaporateur (113) ayant un premier côté et un second côté, le premier côté étant couplé au premier côté de l'échangeur de chaleur (108) et à la partie inférieure de l'accumulateur de chaleur (107), et
- un condenseur (114) ayant un premier côté et un second côté, le premier côté étant couplé au second côté de l'échangeur de chaleur (108) et au côté alimentation du réseau de chauffage urbain (104) et le second côté étant couplé au second côté de l'évaporateur (113).

2. Agencement selon la revendication 1, **caractérisé en ce que** l'agencement comprend :
- des moyens (109, 110) pour transporter un liquide de stockage de chaleur depuis la partie inférieure de l'accumulateur de chaleur (107) à travers le premier côté de l'échangeur de chaleur (108) vers la partie supérieure de l'accumulateur de chaleur (107), et
- des moyens (111, 112) pour transporter de l'eau de chauffage urbain depuis le côté alimentation du réseau de chauffage urbain (104) à travers le second côté de l'échangeur de chaleur (108) vers le côté retour du réseau de chauffage urbain (104).

3. Agencement selon la revendication 1 ou 2, **caractérisé en ce que** l'agencement comprend une unité de chauffage (118) couplée entre le premier côté du condenseur (114) et le côté alimentation du réseau de chauffage urbain (104) .

4. Procédé de transfert de chaleur, comprenant :
- le transport de gaz résiduaires à travers un épurateur par voie humide (101) qui est couplé entre un côté retour et un côté alimentation d'un réseau de chauffage urbain (104), et
- le transport d'eau de chauffage urbain à travers l'épurateur par voie humide (101), moyennant quoi la chaleur est transférée depuis les gaz résiduaires vers l'eau de chauffage urbain,
**caractérisé en ce que** le procédé comprend :
- le transport de liquide de stockage de chaleur depuis une partie supérieure d'un accumulateur de chaleur (107) à travers un premier côté d'un échangeur de chaleur (108) vers une partie inférieure de l'accumulateur de chaleur (107),
- le transport d'eau de chauffage urbain depuis le côté retour du réseau de chauffage urbain (104) à travers un second côté de l'échangeur de chaleur (108) vers le côté alimentation du réseau de chauffage urbain (104), moyennant quoi la chaleur est transférée depuis le liquide de stockage de chaleur vers l'eau de chauffage urbain,
- après que le liquide de stockage de chaleur depuis la partie supérieure de l'accumulateur de chaleur (107) est passé à travers le premier côté de l'échangeur de chaleur (108), le transport du liquide de stockage de chaleur à travers un premier côté d'un évaporateur (113),
- après que l'eau de chauffage urbain depuis le côté retour du réseau de chauffage urbain (104) est passée à travers le second côté de l'échangeur de chaleur (108), le transport de l'eau de chauffage urbain à travers un premier côté d'un condenseur (114), et
- la mise en circulation de milieux de transfert de chaleur dans un circuit fermé (121) entre un second côté de l'évaporateur (113) et un second côté du condenseur (114), moyennant quoi la chaleur est transférée depuis le liquide de stockage de chaleur vers l'eau de chauffage urbain.

5. Procédé selon la revendication 4, **caractérisé en ce que** le procédé comprend :
- après que l'eau de chauffage urbain depuis le côté retour du réseau de chauffage urbain (104) est passée à travers le premier côté du condenseur (114), le chauffage de l'eau de chauffage urbain avec une unité de chauffage (118).
